# FASCICULE DE BREVET EUROPEEN

(11) **EP 2 162 276 B1**
(45) Date de publication et mention de la délivrance du brevet: **22.02.2012**
(21) Numéro de dépôt: 08774153.4
(22) Date de dépôt: 19.06.2008
(51) Int. Cl.: B29C 73/16

(54) **Procédé d'application d'une couche de matériau à l'intérieur d'un pneumatique pour cycle**
Verfahren zum Anbringen einer Materialschicht in einem Fahrradreifen
Method for applying a layer of material inside a cycle tyre

(30) Priorité: 28.06.2007 FR 0704639
(43) Date de publication de la demande: 17.03.2010
(73) Titulaire: Société de Technologie MICHELIN, 63000 Clermont-Ferrand (FR); MICHELIN Recherche et Technique S.A., 1763 Granges-Paccot (CH)
(72) Inventeur: MERINO LOPEZ, Jose, F-63200 Riom (FR); BESTGEN, Luc, F-63140 Chatel-guyon (FR); PIALOT, Frédéric, F-Moissat 63190 (FR)
(74) Mandataire: Dequire, Philippe Jean-Marie Denis
(86) Numéro de dépôt international: PCT/EP2008/057798
(87) Numéro de publication internationale: WO 2009/000744

(56) Documents cités:
- GB-A- 189 709 472
- JP-A- 2001 018 609
- US-A- 1 373 834
- US-A- 3 000 615
- US-A1- 2003 150 544

## Description

### Domaine de l'invention

La présente invention concerne un pneumatique tubeless pour cycle comportant une couche auto-obturante (« *self sealing* ») disposée sur sa paroi intérieure pour obturer d'éventuelles perforations en service et plus particulièrement le procédé d'application d'une telle couche de matériau à l'intérieur du pneumatique pour cycle.

### Arrière-plan technologique

Le problème des crevaisons, à savoir comment permettre à un véhicule de poursuivre sa route malgré une perte importante ou totale de pression d'un ou plusieurs de ses pneumatiques ou comment éviter une fuite d'air à la suite d'une perforation date du début même de l'utilisation des roues chaussées de pneumatiques gonflés.

Une solution très souvent proposée est d'ajouter sur la paroi intérieure du pneumatique une couche auto-obturante.

Le document US 4,426,468 présente un exemple de pneumatique pour cycle comportant une couche auto-obturante sur sa paroi intérieure. Cependant, en raison de la très grande souplesse d'un tel pneumatique, ce document souligne qu'il est très difficile de déposer après vulcanisation une couche de produit auto-obturant à l'intérieur d'un pneumatique pour cycle et propose de disposer cette couche avant vulcanisation entre une couche de gomme étanche et la nappe carcasse.
GB 18979472 décrit la fabrication d'un pneumatique pour cycle de telle sorte que les couches intérieures étanches soient dans un état de compression lorsque le pneumatique est gonflé. Cette fabrication consiste à fabriquer d'abord la partie extérieure du pneumatique puis à retourner cette partie extérieure, mettre en place cette partie extérieure sur un mandrin de forme torique, appliquer les couches étanches à la périphérie extérieure de la partie retournée et retourner le pneumatique. US 2003/150544 décrit l'application en hélice à l'intérieur d'un pneumatique vulcanisé d'un produit auto-obturant sous formes d'une bandelette. JP 2001/018609 décrit l'application en hélice à l'intérieur d'un pneumatique vulcanisé d'un produit auto-obturant par extrusion directe du produit à la surface intérieure du pneumatique.

### Description de l'invention

L'invention a pour objet un procédé d'application d'une couche de matériau sur la paroi intérieure d'un pneumatique pour cycle en forme de tore avec une paroi intérieure et une paroi extérieure et comportant un sommet prolongé par deux flancs et deux bourrelets et deux tringles disposées dans les bourrelets, le pneumatique ayant une pression nominale de gonflage donnée, comportant les étapes suivantes :
- retourner le pneumatique pour amener la paroi intérieure à l'extérieur du tore et la paroi extérieure à l'intérieur du tore ;
- mettre en extension la paroi extérieure du tore du pneumatique par application sur ladite paroi extérieure d'une pression de gonflage intérieure supérieure à la pression de gonflage nominale dudit pneumatique ;
- appliquer la couche de matériau sur la paroi intérieure du pneumatique ; et
- retourner le pneumatique pour ramener les parois intérieure et extérieure dans leurs positions initiales.

Dans un mode de réalisation préférentiel, le pneumatique ayant une pression nominale de gonflage donnée de l'ordre de 2 bars pour un pneumatique tubeless, la pression intérieure est comprise entre 3 et 8 bars.

Avantageusement, avant d'appliquer la couche de matériau, on effectue un nettoyage de la paroi intérieure du pneumatique.

La couche de matériau peut être appliquée par extrusion directe du matériau sur la paroi du pneumatique d'un skim ou d'une bandelette de matériau.

Le procédé selon l'invention est particulièrement adapté à la mise en place d'une couche auto-obturante ou d'un stratifié auto-obturant comportant une couche de matériau auto-obturant revetue d'un film thermoplastique extensible.

La couche auto-obturante se trouve ainsi d'une manière très avantageuse dans un état de contraintes de compression qui contribue au bon fonctionnement auto-obturant.

D'autres caractéristiques et avantages de l'invention ressortent de la description faite ci-après en référence aux dessins annexés qui montrent, à titre d'exemples non limitatifs, des formes de réalisation de l'objet de l'invention.

### Description brève des dessins

Tous les détails de réalisation sont donnés dans la description qui suit, correspondant à l'application d'une couche auto-obturante ou d'un stratifié auto-obturant, complétée par les figures 1 à 9, dans lesquelles :
- la figure 1 présente une coupe radiale partielle d'un pneumatique pour cycle incorporant un stratifié auto-obturant ;
- la figure 2 présente la première étape d'application d'une couche auto-obturante sur un pneumatique pour cycle ;
- la figure 3 illustre un pneumatique pour cycle après retournement ;
- la figure 4 illustre un pneumatique pour cycle retourné et placé sur un tambour de gonflage ;
- la figure 5 présente la phase de gonflage du pneumatique retourné ;
- la figure 6 présente le pneumatique pour cycle retourné et gonflé ;
- la figure 7 présente la pose de la couche auto-obturante ;
- la figure 8 présente la remise à l'endroit du pneumatique de la figure 7 ; et
- la figure 9 présente le pneumatique de la figure 8 remis à l'endroit.

### Description détaillée de l'invention

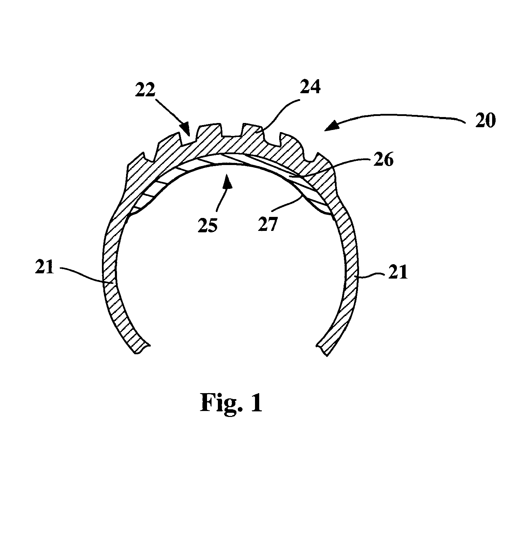

La figure 1 illustre un pneumatique pour cycle comportant un stratifié auto-obturant.

Ce pneumatique 20 comprend un sommet 22 prolongé par deux flancs 21 et deux bourrelets 23a et 23b. Une armature de carcasse (non représentée) s'étend d'un bourrelet à l'autre dans les flancs et le sommet. Une chape 24 est disposée sur l'armature de carcasse au niveau du sommet. Ce pneumatique comprend un stratifié auto-obturant 25. Ce stratifié 25 est constitué d'une couche auto-obturante 26 recouverte par un film thermoplastique extensible 27. Le film thermoplastique extensible est en contact avec l'air de ta cavité intérieure du pneumatique. Le stratifié 25 s'étend sensiblement uniquement au niveau du sommet 22 du pneumatique 20.

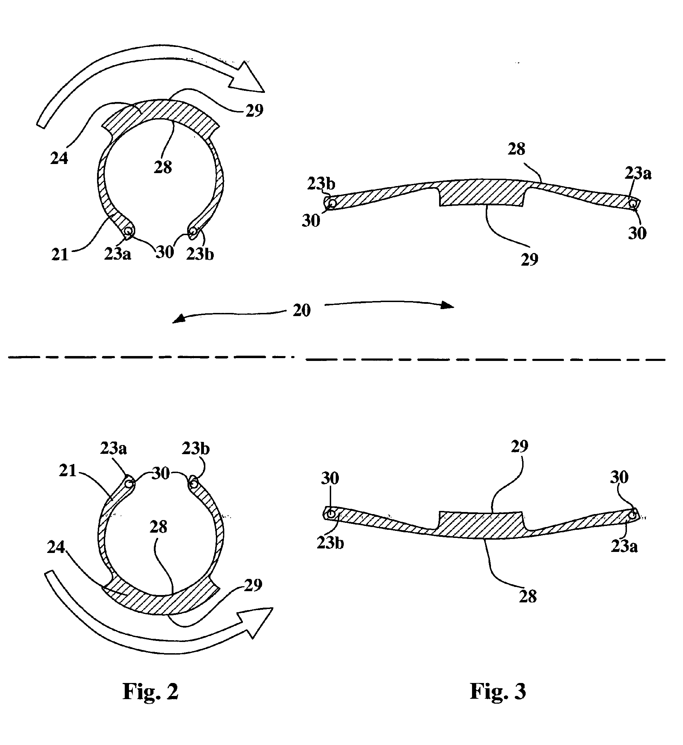

L'application d'un stratifié auto-obturant selon l'invention sur la paroi intérieure d'un pneumatique pour cycle est maintenant décrite en liaison avec les figures 2 à 9. Comme souligné dans le brevet cité US 4,424,295, il est très difficile de déposer après vulcanisation une couche de produit auto-obturant à l'intérieur d'un pneumatique pour cycle en raison de la très grande souplesse de ce type de pneumatique. Le procédé selon l'invention permet de réaliser aisément une telle application.

La figure 2 illustre la première étape du procédé d'application selon l'invention d'un stratifié auto-obturant sur un pneumatique pour cycle. Ce pneumatique 20 comprend notamment deux flancs 21, une chape 24 et présente une paroi intérieure 28 et une paroi extérieure 29. La première étape consiste à retourner ce pneu de telle sorte que la paroi intérieure 28 se retrouve à l'extérieur du pneumatique et que la paroi extérieure 29 à l'intérieur. Ce retournement entraîne aussi que les deux bourrelets 23a et 23b se retrouvent dans une position inversé axialement, comme indiqué aux figures 2 et 3. Le retournement peut s'effectuer dans le sens indiqué par les flèches de la figure 2.

Ce retournement est très facile pour un pneumatique pour cycle en raison de la très grande souplesse en flexion des tringles 30 qui peuvent aisément être manipulées et pliées sans subir de déformations permanentes et tout en restant sensiblement inextensobles pour pouvoir ancrer les bourrelets sur les sièges de jante. Ce retournement peut être fait manuellement.

La figure 3 présente le pneumatique 20 retourné.

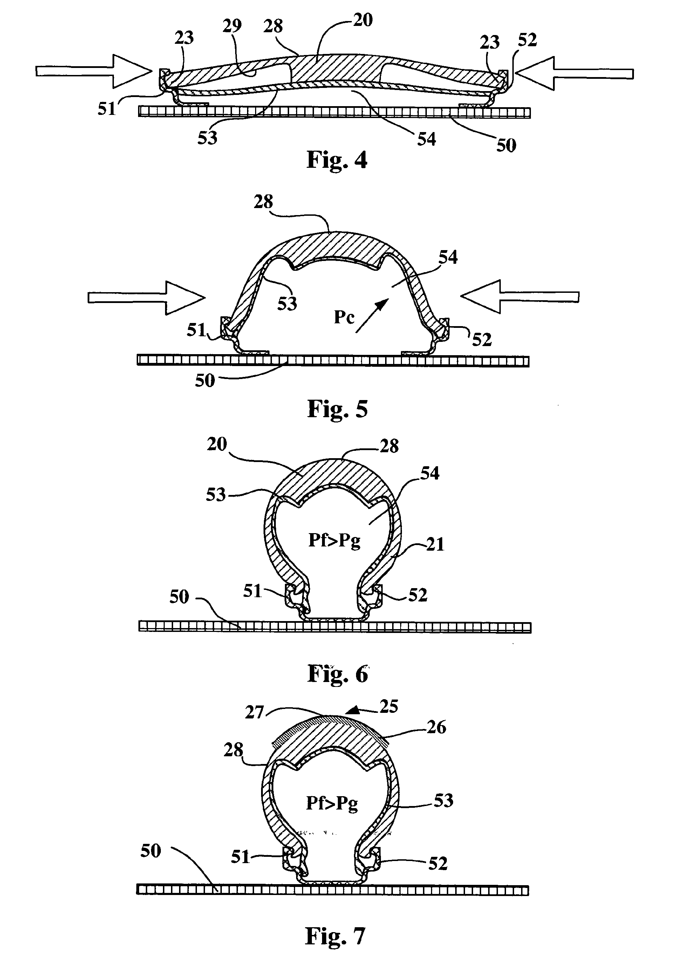

On place ensuite le pneumatique 20 retourné sur un tambour de gonflage 50 schématiquement illustré (figure 4) et comportant deux flasques 51 et 52 adaptés pour recevoir les bourrelets 23 du pneumatique et une membrane 53 destinée à assurer l'étanchéité de la cavité 54 formée par le tambour, les flasques et la membrane. Les deux tringles 30 permettent d'ancrer les deux bourrelets sur les flasques 51 et 52 et d'appliquer une pression de gonflage élevée dans la cavité 54.

On gonfle ensuite la cavité 54 tout en rapprochant les deux flasques 51 et 52 l'un vers l'autre tel qu'illustré à la figure 5. La pression intérieure Pc de la cavité 54 plaque la membrane 53 contre la paroi extérieure 29 du pneumatique. Les deux flèches de la figure 5 montrent la direction du mouvement de rapprochement axial des deux flasques 51, 52.

A la figure 6, le mouvement de rapprochement axial des deux flasques 51 et 52 est achevé et la pression intérieure dans la cavité 54 est portée à une valeur Pf. Cette pression Pf est de préférence sensiblement supérieure à la pression nominale de gonflage du pneumatique 20 pour amener l'armature de carcasse du pneumatique 20 à un état d'extension supérieur à celui normalement subi en service par le pneumatique.

Cette pression de gonflage Pf a aussi l'avantage de donner au pneumatique 20 ainsi monté à l'envers une rigidité d'ensemble tout à fait suffisante pour pouvoir appliquer sur la paroi intérieure 28 le stratifié auto-obturant 25.

Juste avant la pose du stratifié 25, il est possible de réaliser un nettoyage du pneumatique. Ce nettoyage peut être un simple dépoussiérage par brossage, ou utiliser de l'eau ou tout autre produit et méthode appropriés.

La figure 7 présente le pneumatique 20 comportant un stratifié 25 déposé sur sa paroi intérieure 28. Ce stratifié peut avoir été réalisé antérieurement par extrusion d'un skim aux largeur et épaisseur voulues et dépôt sur un film de protection, par exemple siliconé, et enroulement en bobines. Lors de l'application sur le pneumatique, on enroule une couche du skim autour du pneumatique en décollant lors de l'application le skim du film siliconé de protection et en mettant en rotation le pneumatique. On effectue ensuite l'application du film thermoplastique 27.

De préférence, le film thermoplastique 27 est appliqué sur la paroi libre du skim avant enroulement de sorte qu'on enroule une bobine de stratifié prêt à l'application sur le pneumatique 20 et cette application s'effectue en une seule opération.

On peut aussi appliquer la couche auto-obturante par enroulement d'une bandelette d'épaisseur et de largeur inférieures aux dimensions voulues.

On peut enfin extruder directement le matériau auto-obturant 26 sur la paroi intérieure 28 du pneumatique et enrouler le film thermoplastique 27 ensuite.

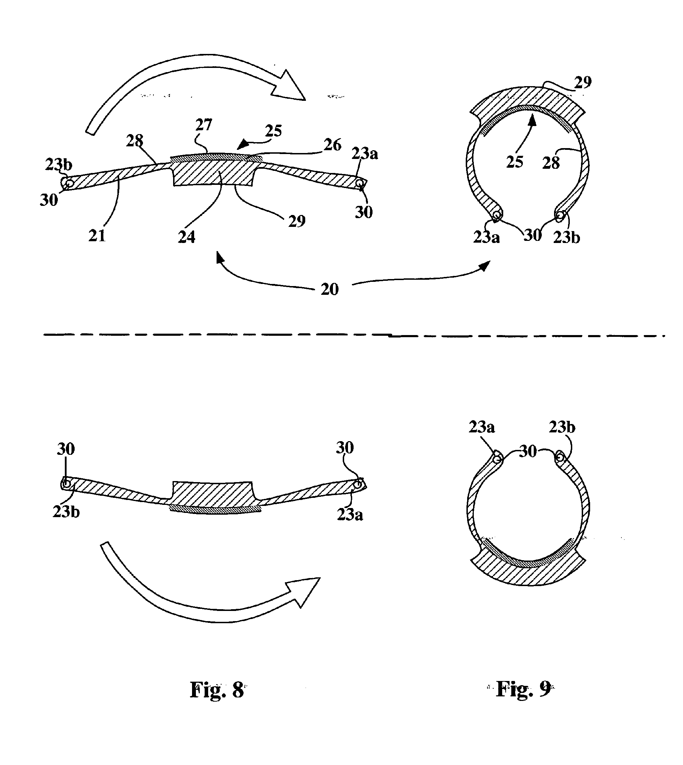

Après la pose du stratifié 25, on remet le pneumatique à l'endroit par un second retournement tel qu'illustré à la figure 8. On obtient alors le pneumatique illustré à la figure 9.

Il est à noter que la couche auto-obturante 26 du stratifié 25, posée sans contraintes particulières sur la paroi intérieure 28 du pneumatique retourné, gonflé à Pf, se retrouve après le retournement dans un état de compression lié à la reprise de la forme normale du pneumatique 20 et au dégonflement de la cavité 54. Cet état de compression doit se maintenir lorsque le pneumatique 20 est gonflé à sa pression nominale de gonflage puisque l'application a eu lieu avec une pression dans la cavité 54 supérieure à cette pression nominale de gonflage Pg. Cet état de compression est très favorable à l'efficacité de la couche auto obturante 26 et du stratifié auto-obturant 25. Lorsque la pression nominale de gonflage Pg est de 2 bars, la pression appliquée peut atteindre 6 bars voire 8 bars.

L'invention a été décrite en prenant comme exemple l'application d'une couche ou d'un stratifié auto-obturant, mais elle s'applique à tout type de couche de matériau. On peut en particulier l'utiliser pour appliquer des couches étanches, mais aussi pour fixer de façon aisée des patchs comportant des capteurs par exemple.

L'invention n'est pas limitée aux exemples décrits et représentés et diverses modifications peuvent y être apportées sans sortir de son cadre défini par les revendications annexées.

## Revendications

1. Procédé d'application d'une couche de matériau (25, 26) sur la paroi intérieure d'un pneumatique (20) pour cycle en forme de tore avec une paroi intérieure (28) et une paroi extérieure (29) et comportant un sommet (22) prolongé par deux flancs (21) et deux bourrelets (23a, 23b) et deux tringles (30a, 30b) disposées dans lesdits bourrelets, ledit pneumatique ayant une pression nominale de gonflage donnée, comportant les étapes suivantes :
- retourner le pneumatique (20) pour amener la paroi intérieure (28) à l'extérieur du tore et la paroi extérieure (29) à l'intérieur du tore ;
- mettre en extension la paroi extérieure (29) du tore du pneumatique par application sur ladite paroi extérieure (29) d'une pression de gonflage intérieure supérieure à la pression de gonflage nominale dudit pneumatique ;
- appliquer la couche de matériau (25, 26) sur la paroi intérieure (28) du pneumatique (20) ; et
- retourner le pneumatique (20) pour ramener les parois intérieure (28) et extérieure (29) dans leurs positions initiales.

2. Procédé selon la revendication 1, dans lequel, la pression de gonflage intérieure est comprisse entre 3 et 8 bars.

3. Procédé selon l'une des revendications 1 à 2, dans lequel avant d'appliquer la couche de matériau (25, 26), on effectue un nettoyage de la paroi intérieure (28) du pneumatique.

4. Procédé selon l'une des revendications 1 à 3, dans lequel la couche de matériau (26) est appliquée par extrusion directe du matériau sur la paroi intérieure (28) du pneumatique.

5. Procédé selon l'une des revendications 1 à 3, dans lequel la couche de matériau (26) est appliquée par extrusion directe sur la paroi intérieure (28) du pneumatique d'une bandelette de matériau.

6. Procédé selon l'une quelconque des revendications précédentes, dans lequel le pneumatique (20) est un pneumatique tubeless.

7. Procédé selon l'une quelconque des revendications précédentes, dans lequel le matériau est un produit auto-obturant.

8. Procédé selon l'une quelconque des revendications précédentes, dans lequel la couche de matériau appliquée est un stratifié auto-obturant (25) comportant une couche de matériau auto-obturant (26) revêtue d'un film thermoplastique extensible (27).

## Claims

1. Method of applying a layer of material (25, 26) to the inner wall of a cycle tyre (20) in the form of a torus, with an inner wall (28) and an outer wall (29) and having a crown (22) extended by two sidewalls (21), two beads (23a, 23b) and two bead wires (30a, 30b) placed in said beads, said tyre having a given nominal inflation pressure, which comprises the following steps:
- the tyre (20) is turned inside-out so as to bring the inner wall (28) to the outside of the torus and the outer wall (29) to the inside of the torus;
- the outer torus wall (29) of the tyre is extended by applying an internal inflation pressure to said outer wall (29) above the nominal inflation pressure of said tyre;
- the layer of material (25, 26) is applied to the inner wall (28) of the tyre (20); and
- the tyre (20) is turned inside-out so as to bring the inner wall (28) and the outer wall (29) back into their initial positions.

2. Method according to Claim 1, in which the internal inflation pressure is between 3 and 8 bar.

3. Method according to either of Claims 1 and 2, in which a cleaning operation is carried out on the inner wall (28) of the tyre before the layer of material (25, 26) is applied.

4. Method according to one of Claims 1 to 3, in which the layer of material (26) is applied by direct extrusion of the material onto the inner wall (28) of the tyre.

5. Method according to one of Claims 1 to 3, in which the layer of material (26) is applied by direct extrusion of a strip of material onto the inner wall (28) of the tyre.

6. Method according to any one of the preceding claims, in which the tyre (20) is a tubeless tyre.

7. Method according to any one of the preceding claims, in which the material is a self-sealing product.

8. Method according to any one of the preceding claims, in which the layer of material applied is a self-sealing laminate (25) comprising a layer of self-sealing material (26) coated with an extensible thermoplastic film (27).

## Patentansprüche

1. Verfahren zum Aufbringen einer Materialschicht (25, 26) auf die Innenwand eines Zweiradluftreifens (20) in Form eines Torus mit einer Innenrand (28) und einer Außenrand (29) und mit einem durch zwei Seitenflächen (21) verlängerten Scheitel (22) und zwei Wulsten (23a, 23b) sowie zwei in den Wulsten angeordneten Dreiecken (30a, 30b), wobei der Luftreifen einen gegebenen Nennfülldruck besitzt, das die folgenden Schritte umfasst:
- Umwenden des Luftreifens (20), um die Innenwand (28) zur Außenseite des Torus zu machen und um die Außenwand (29) zur Innenseite des Torus zu machen;
- Ausdehnen der Außenwand (29) des Torus des Luftreifens durch Ausüben eines Innenfülldrucks auf die äußere Wand (29), der größer ist als der Nennfülldruck des Luftreifens;
- Aufbringen der Materialschicht (25, 26) auf die Innenwand (28) des Luftreifens (20); und
- Umwenden des Luftreifens (20), um die Innenwand (28) und die Außenwand (29) wieder in ihre ursprünglichen Positionen zurückzubringen.

2. Verfahren nach Anspruch 1, wobei der innere Fülldruck im Bereich von 3 bis 8 Bar liegt.

3. Verfahren nach einem der Ansprüche 1 bis 2, wobei vor dem Aufbringen der Materialschicht (25, 26) eine Reinigung der Innenwand (28) des Luftreifens ausgeführt wird.

4. Verfahren nach einem der Ansprüche 1 bis 3, wobei die Materialschicht (26) durch direkte Extrusion des Materials auf die Innenwand (28) des Luftreifens aufgebracht wird.

5. Verfahren nach einem der Ansprüche 1 bis 3, wobei die Materialschicht (26) durch direkte Extrusion auf die Innenwand (28) des Luftreifens eines Materialbandes aufgebracht wird.

6. Verfahren nach einem der vorhergehenden Ansprüche, wobei der Luftreifen (20) ein schlauchloser Luftreifen ist.

7. Verfahren nach einem der vorhergehenden Ansprüche, wobei das Material ein selbstverschließendes Produkt ist.

8. Verfahren nach einem der vorhergehenden Ansprüche, wobei die aufgebrachte Materialschicht eine selbstverschließende Schichtanordnung (25) ist, die eine selbstverschließende Materialschicht (26) aufweist, die mit einem ausdehnbaren thermoplastischen Film (27) beschichtet ist.
